# NEUE EUROPÄISCHE PATENTSCHRIFT

(11) **EP 0 831 245 B2**
(45) Veröffentlichungstag und Bekanntmachung des Hinweises auf die Entscheidung über den Einspruch: **02.04.2003**
(45) Hinweis auf die Patenterteilung: 01.09.1999
(21) Anmeldenummer: 97106799.6
(22) Anmeldetag: 24.04.1997
(51) Int. Cl.: F16F 9/48

(54) **Industrie-Stossdämpfer**
Industrial shock absorber
Amortisseur de chocs industriel

(30) Priorität: 23.08.1996 DE 19634092
(43) Veröffentlichungstag der Anmeldung: 25.03.1998
(73) Patentinhaber: ACE Stossdämpfer GmbH, 40764 Langenfeld (DE)
(72) Erfinder: Kirst, Rudi, 40764 Langenfeld (DE)
(74) Vertreter: Beyer, Rudi

(56) Entgegenhaltungen:
- WO-A-94/17317
- DE-A- 3 324 165
- DE-A- 3 643 290
- DE-U- 9 313 280
- GB-A- 249 928
- US-A- 4 591 031
- US-A- 5 380 026

## Beschreibung

Die GB-A-249 928 betrifft einen als Prellbock ausgebildeten Stoßdämpfer mit einem rohrförmigen Gehäuse, einem längsverschieblich und dichtend darin angeordneten topfförmigen Dämpfungskolben, dem eine durch eine an einem Ende des einstückigen Gehäuses befestigte Lagerbuchse abgedichtet nach außen herausgeführte Kolbenstange zugeordnet ist, wobei der Dämpfungskolben eine oder mehrere Drosselbohrungen aufweist, die seine Wand durchsetzen und einen Dämpfungsraum mit einem dem Dämpfungskolben umgebenden Ringraum verbinden, der seinerseits an einen auf der Rückseite des Dämpfungskolbens befindlichen Ausgleichsraum flüssigkeitsleitend anschließbar ist. Dieser Prellbock in Form eines Ölstoßdämpfers besitzt ein einstückiges Gehäuse, das etwa topfförmig ausgebildet ist, wobei das offene Ende durch einen Deckel verschlossen ist, während an dem Bodenteil ein zapfenförmiger Gehäusesatz materialmäßig einstückig angeordnet ist, durch den eine Kolbenstange abgedichtet herausgeführt ist. Auf dem freien, inneren Ende der Kolbenstange ist ein topfförmiger Kolben angeordnet, dessen offene Stirnseite sich zu dem dem zapfenförmigen Gehäuseansatz entgegengesetzten Endabschnitt des im Querschnitt größeren Gehäuses erstreckt. Dieses Gehäuse besteht im Inneren aus zwei Gehäuseabschnitten von unterschiedlichen Durchmessern, wobei der im Durchmesser größere Gehäuseabschnitt dem zapfenförmigen Ansatz zugekehrt ist. Der topfförmige Kolben besitzt sowohl an seinem Boden mehrere ihn durchsetzende Durchgangsbohrungen, als auch zahlreiche Bohrungen, die seine zylindrischen Wandungen radial durchdringen. Diese radialen Bohrungen werden bei einem Hub des Kolbens nacheinander von dem im Durchmesser kleineren Gehäuseabschnitt überstrichen, wodurch ein Drosseleffekt entsteht, da immer weniger Bohrungen zur Abströmung des zusammengepreßten Öls in einem den Kolben umgebenden Ringraum zur Verfügung stehen, der durch den im Durchmesser größeren Gehäuseabschnitt gebildet wird. Außerdem besitzt der Kolben sich in Richtung der Kolbenstange verjüngende Schlitzausnehmungen, die ebenfalls zur Drosselung des Abströmquerschnittes für das zusammengepreßte Öl dienen, damit dieses ebenso wie über die Bohrungen in einen hinter den Kolben angeordneten Ausgleichsraum strömen kann. Auf einem den Kolben durchsetzenden, im Durchmesser verringerten Endabschnitt der Kolbenstange ist ein Plattenventil angeordnet, das zwischen der inneren Stirnseite des Kolbens und einem Anschlag hin und her verschiebbar ist und das die den Kolbenboden durchsetzende Bohrungen beim Bremshub verschließt und beim Rückhub öffnet, so daß der Bremsraum mit dem Ausgleichsraum über die im Kolbenboden verbundenen Bohrungen in flüssigkeitsleitender Verbindung steht, so daß das in dem Ausgleichsraum befindliche Öl über diese Bohrungen, über die Drosselbohrungen und über den Ringspalt in den Bremsraum abströmen kann.

Die DE-A-36 43 290 betrifft eine Vorrichtung zur Wegbestimmung eines Kolbens in einem Zylinder für hydraulische, pneumatische oder hydropneumatische Aggregate, wie Schwingungsdämpfer, Gasfedern und hydropneumatische Federungen, wobei der Kolben über eine Kolbenstange in einem mit mindestens einem Dämpfungsmittel gefüllten Zylinder axial verschiebbar angeordnet ist, wobei zur Niveaumessung als Meßstrecke ein den Niveaubereich festlegendes Element von mindestens einem Hallsensor vorgesehen ist. Es ist eine über den gesamten Hub des Kolbens verlaufende Meßstrecke, bestehend aus mindestens einem Teil der Oberfläche des Zylinders, einem den Niveaubereich festlegenden Elementes und mindestens einem Teil der Oberfläche der Kolbenstange vorgesehen, wobei mindestens eines der Meßelemente im Abstand zum Zylinder angeordnet und gegenüber diesem relativ axial bewegbar ist. Die Elemente sind magnetisch leitfähig, wobei der im Abstand angeordnete Hallsensor auf der dem Element entgegengesetzten Seite einen Permanentmagneten aufweist. Eingebaut ist die Vorrichtung in einem Schwingungsdämpfer, der im wesentlichen aus einem Zylinder, einem Kolben und einem Kolben mit Kolbenstange besteht. Im Hohlraum des Zylinders befindet sich das der Schwingungsdämpfung dienende Dämpfungsmedium. Zur Befestigung des Schwingungsdämpfers in einem Fahrzeug sind Befestigungsvorrichtungen vorgesehen. Das Ganze dient somit als Federung für Fahrzeugräder (PKW).

Aus der US-A-5,380,026 ist ein Stoßdämpfer für eine Fahrradgabel vorbekannt, der aus teleskopförmig ineinander verschiebbaren Teilen besteht, die gegen Federdruck und gegen ein Dämpfungsmedium, das durch Bohrungen eines Kolbens abströmen kann, besteht.

Der Erfindung liegt die Aufgabe zugrunde, einen mit einem flüssigen Dämpfungsmedium arbeitenden Industrie-Stoßdämpfer zu schaffen, der bei einem im Verhältnis zum Außendurchmesser relativ großen Durchmesser des Dämpfungskolbens und bei konstruktiv einfachem Aufbau eine einfache Reproduzierbarkeit verschiedener Dämpfungskurven über einen großen Temperaturbereich gestattet.

Die Aufgabe wird durch die in **Patentanspruch 1** wiedergegebenen Merkmale gelöst.

Ein erfindungsgemäßer Industrie-Stoßdämpfer läßt sich aus relativ wenigen Einzelteilen einfach und preisgünstig fertigen. Das Gehäuse kann zum Beispiel von der Stange gefertigt werden und zum Beispiel zwei Bohrungen für einen Stiftschlüssel am Boden aufweisen. Auch die Kolbenstange kann von der Stange gefertigt werden und eine Nut und einen Absatz aufweisen, der angedreht wird. Ferner wird der topfförmige Kolben von der Stange gefertigt, mit Drosselbohrungen und mit einer Rückschlagventilbohrung versehen. Auch das Lager kann von der Stange gefertigt werden und bei der Montage zum Beispiel eingeklebt werden. Auch eine Rollmembran oder ein aus geschlossenporigem Elastomer bestehender Druckspeicher haltender Ring kann von der Stange gefertigt werden und braucht lediglich mit einer oder mehreren Bohrungen versehen zu werden. Sofern eine Rollmembran vorgesehen wird, dient diese als Dichtung, als Volumenausgleich für die Kolbenstange und als Rückstellfeder.

Bei solchen Ausführungsformen, die einen Druckspeicher oder Absorber aufweisen, der aus einem geschlossenporigen Elastomer bestehen, dient dieser als Volumenausgleich beim Einfahren der Kolbenstange.

Weitere erfinderische Ausführungsformen sind in den **Patentansprüchen 2** bis **6** beschrieben.

In der Zeichnung ist die Erfindung - teils schematisch - an zwei Ausführungsbeispielen im Längsschnitt veranschaulicht. Es zeigen:
- Fig. 1: einen Industrie-Stoßdämpfer mit einer Rollmembran;
- Fig. 2: einen ähnlich aufgebauten Industrie-Stoßdämpfer mit einem Elastomer-Druckspeicher.

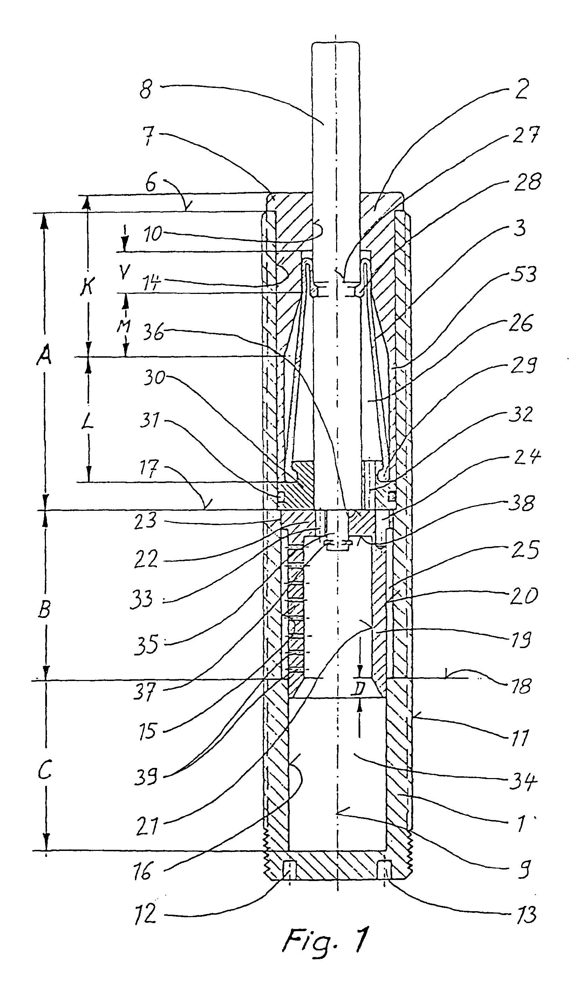

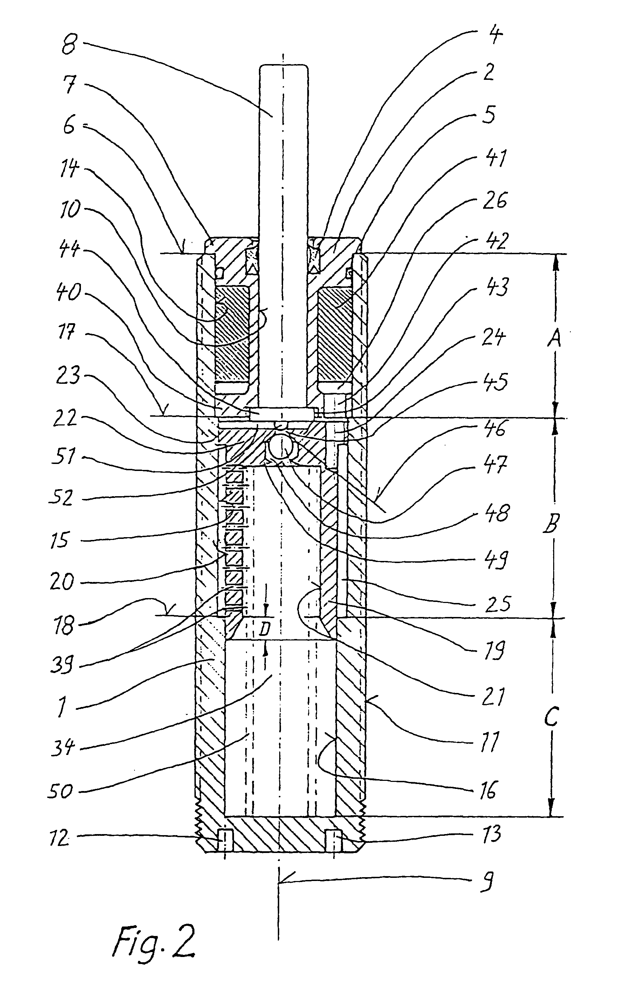

Mit den Bezugszeichen 1 ist ein materialmäßig einstückiges, aus Stahl bestehendes, rohrförmiges Gehäuse bezeichnet, das zum Beispiel durch Aufbohren einer Stange hergestellt und dadurch besonders dicht und druckfest ist. Das Gehäuse 1 ist nur an einer Stimseite offen ausgebildet. In die offene Mündungsöffnung ist eine Lagerbuchse 2 angeordnet, zum Beispiel eingeklebt, eingeschraubt oder in sonstiger Weise fest, aber lösbar, in dem Gehäuse 1 befestigt. Die Lagerbuchse 2 ist nach außen hin abgedichtet. Dies geschieht bei der Ausführungsform nach Fig. 1 durch eine Rollmembran 3 und bei der Ausführungsform nach Fig. 2 durch eine in einer Ringaussparung der Lagerbuchse 2 angeordnete Dichtung 4. Die Dichtung 4 kann im Bedarfsfall auch mehrfach angeordnet sein, insbesondere nach beiden Seiten hin abdichtend wirken. Des weiteren ist bei der Ausführungsform nach Fig. 2 eine Dichtung 5 in einer Ringnut angeordnet.

Wie man erkennt, übergreift die Lagerbuchse 2 die nach außen gerichtete Ringstirnfläche 6 mit einem im Durchmesser vergrößerten Kragen 7. Dieser Kragen 7 besitzt eine planparallel zu der Ringstirnfläche 6 verlaufende Ringfläche, so daß die Lagerbuchse 2 mit ihrem Kragen 7 flächig an der Ringstirnfläche 6 anliegt.

In der Lagerbuchse 2 ist eine Kolbenstange 8 längsverschieblich in einer koaxial zur Längsmittenachse 9 verlaufenden Bohrung 10 angeordnet.

Das Gehäuse 1 ist an seiner Außenmantelfläche 11 bei den dargestellten Ausführungsformen mit gleichem Durchmesser ausgestaltet und kann zylindrisch ausgebildet sein. Außerdem erkennt man aus den Fig. 1 und 2, daß die dargestellten Ausführungsformen an ihrem der Kolbenstange 8 abgewandten Endabschnitt mit Außengewinde zum Befestigen des Industrie-Stoßdämpfers in einer nicht dargestellten Vorrichtung, zum Beispiel in einem Handhabungsgerät, in einer Werkzeugmaschine oder dergleichen, versehen sind.

Beide Ausführungsformen besitzen an der geschlossen ausgebildeten Stirnseite zwei spiegelbildlich in Bezug auf die Längsmittenachse 9 angeordnete Sackbohrungen 12 bzw. 13, in die ein nicht dargestelltes Werkzeug eingesetzt werden kann.

Das Gehäuse 1 besteht in seinem Inneren aus insgesamt drei aufeinanderfolgende, durch zylindrische Mantelflächen begrenzte Gehäuseabschnitte 14, 15 und 16. Die Anordnung ist derart bei den dargestellten Ausführungsformen getroffen worden, daß der jeweils folgende Gehäuseabschnitt sich im Durchmesser verkleinert. Das bedeutet, daß der Gehäuseabschnitt 14 den größten Innendurchmesser, der darauffolgende Gehäuseabschnitt 15 einen etwas kleineren Durchmesser und der Gehäuseabschnitt 16 den kleinsten Durchmesser aufweist. Über ihre jeweilige Länge A, B bzw. C sind die Gehäuseabschnitte 14, 15 und 16 jeweils durchgehend zylindrisch ausgebildet. Außerdem sind sämtliche Gehäuseabschnitte 14, 15 und 16 koaxial zueinander angeordnet, so daß das Gehäuse 1 ein patronenförmiges Äußeres besitzt.

Durch die Unterteilung des Gehäuses 1 in den drei Gehäuseabschnitten 14, 15 und 16 mit jeweils unterschiedlichem Innendurchmesser ergeben sich jeweils an dem Übergang zu dem folgenden Gehäuseabschnitt, also von 14 auf 15 und von dem Gehäuseabschnitt 15 auf 16 eine nach innen hervorragende, relativ scharfkantige Ringschulter 17 bzw. 18.

Wie aus der Zeichnung hervorgeht, ist ein topfförmiger Dämpfungskolben 19 mit seinem der geschlossenen Stirnseite des Gehäuses 1 zugekehrten Längenabschnitt an der Innenwand des Gehäuseabschnittes 16 bis auf geringfügige Leckagen also möglichst druckmitteldicht geführt. Zu diesem Zweck ist der Dämpfungskolben 19 an seiner Außenmantelfläche 20 der Innenmantelfläche des Gehäuseabschnittes 16 angepaßt. Wenn die Innenmantelfläche des Gehäuseabschnittes 16 bis auf geringfügige Leckagen zylindrisch ist, ist auch die Außenmantelfläche 20 zylinderförmig ausgebildet.

Bei sämtlichen Ausführungsformen ist der Dämpfungskolben 19 an seiner dem geschlossenen Endabschnitt des Gehäuses 1 zugekehrten Stimseite rohrförmig offen ausgebildet, wobei der Dämpfungskolben 19 auf einem Längenabschnitt D sich konisch nach außen hin erweitert.

An seiner Innenseite ist der Dämpfungskolben 19 mit einer zylindrischen Innenmantelfläche 21 versehen, die sich etwa über 80 % der Gesamtlänge des Kolbens erstreckt. Der rohrförmige Teil des Dämpfungskolbens 19 ist durch einen Kolbenboden 22 materialmäßig einstückig mit dem rohrförmigen Längenabschnitt des Dämpfungskolbens 19 verbunden. In diesem Bereich weist der Dämpfungskolben 19 eine die Außenmantelfläche 20 übergreifende Ringschulter 23 auf, mit der der Dämpfungskolben 19 an der Innenmantelfläche des Gehäuseabschnittes 15 längsverschieblich gelagert und geführt ist. Die Ringschulter 23 kann mit mehreren stegförmigen Durchbrechungen oder - wie dargestellt - mit mindestens einer, vorzugsweise mit mehreren über den Umfang verteilten, parallel zur Längsmittenachse 9 verlaufenden Verbindungsbohrungen 24 versehen sein.

Zwischen der Außenmantelfläche 20 des Dämpfungskolbens 19 und der Innenmantelfläche des Gehäuseabschnittes 15 ist ein Ringraum 25 angeordnet, der über die Durchbrechungen bzw. Verbindungsbohrungen 24 oder dergleichen mit einem Ausgleichsraum 26 flüssigkeitsleitend verbunden ist.

In diesem Ausgleichsraum 26 ist bei der Ausführungsform nach Fig. 1 die Rollmembran 3 angeordnet, die an ihrem einen Ende mit einer Ringnut 27 der Kolbenstange 8 über einen Wulst 28 druckmitteldicht verbunden ist. An ihrem anderen Ende ist die Rollmembran 3, ebenfalls über eine Wulst 29 mit einer Ringnut eines Ringes 30 verbunden, der von der Kolbenstange 8 zentrisch durchdrungen wird. Der Ring 30 ist über eine Dichtung 31 an der Innenwand des Gehäuseabschnittes 14 flüssigkeitsdicht abgedichtet. Auch die Wulste 28, 29 sind flüssigkeitsdicht ausgebildet.

In dem Ring 30 ist mindestens ein Kanal 32 vorgesehen, dessen Längsachse parallel zur Längsmittenachse 9 verläuft. Der Kanal 32 verbindet den Ausgleichsraum 26 über die Verbindungsbohrung 24 oder dergleichen in der noch zu beschreibenden Art und Weise mit dem Ringraum 25.

Außerdem ist im Kolbenboden 22 eine weitere Durchgangsbohrung 33 vorgesehen, die einen Dämpfungsraum 34 in der noch zu beschreibenden Art und Weise über den Kanal 32 ebenfalls mit dem Ausgleichsraum 26 verbindet.

Mit der Kolbenstange 8 ist einstückig ein im Durchmesser verringerter Zapfen 35 verbunden, der an seinem freien Ende eine Ringschulter 36 aufweist, wobei an dem Zapfen 35 ein Anschlag, zum Beispiel ein Sprengring 37, lösbar angeordnet ist. Wie man aus Fig. 1 erkennt, ist in der ersichtlichen Ausgangsstellung zwischen der Innenseite 38 des Kolbenbodens 22 und dem Anschlag 37 ein gewisses Spiel vorhanden. Der Zapfen 35 braucht in der ihn aufnehmenden Bohrung des Kolbenbodens 22 nicht flüssigkeitsdicht angeordnet zu sein. Allerdings ist der Zapfen 35 in der Durchgangsbohrung des Kolbenbodens 22 um ein durch die Ringschulter 36 der Kolbenstange 8 einerseits und den Anschlag 37 andererseits begrenztes axiales Maß längsverschieblich angeordnet.

Des weiteren erkennt man aus Fig. 1, daß der Dämpfungskolben 19 an seiner einen Seite mehrere parallel zueinander angeordnete Drosselbohrungen 39 aufweist, die den Dämpfungsraum 34 mit dem Ringraum 25 verbinden. Diese Drosselbohrungen 39 werden bei einer Axialverschiebung, also beim Dämpfungsvorgang, der Reihe nach durch die relativ scharfkantige Ringschulter 18 überstrichen und abgedichtet, so daß beim Eintauchen des Dämpfungskolbens 19 in den Dämpfungsraum 34 immer weniger Drosselbohrungen 39 zum Abströmen der Drosselflüssigkeit in den Ringraum 25 und damit über die Verbindungsbohrung 24 und den Kanal 32 in den Ausgleichsraum 26 zur Verfügung stehen.

Beim Eintauchen des Dämpfungskolbens 19, also beim Dämpfungsvorgang, wird die orthogonal zur Längsmittenachse 9 verlaufende, dem Ring 30 zugekehrte planparallele Stirnseite des Dämpfungskolbens 19 von der ebenso ausgebildeten planparallelen Stirnseite des Ringes 30 abgehoben, so daß Dämpfungsflüssigkeit durch die Drosselbohrung 39 in den Ringraum 25, die Verbindungsbohrung 24 und den Kanal 32 in den Ausgleichsraum 26 austreten kann, wobei die Rollmembran 3 unter federelastischer Spannung versetzt wird, so daß sie später beim Zurückführen des Stoßdämpfers in seine Ausgangslage wie ein Federelement unterstützend wirkt.

Die Durchgangsbohrung 33 ist hierbei von der Ringschulter 36 der Kolbenstange 8 abgedeckt. Diese Ringschulter 36 verläuft ebenso wie die der Kolbenstange 8 zugekehrte Stirnfläche des Kolbenbodens 22 orthogonal zur Längsmittenachse 9. Beide einander zugekehrten Stirnflächen der Ringschulter 36 der Kolbenstange 8 und des Kolbenbodens 22 sind planparallel ausgebildet und liegen bis zum Abheben des Dämpfungskolbens 19 von der Ringschulter 36 der Kolbenstange 8 dichtend aufeinander.

Die Lagerbuchse 2 besitzt bei der aus Fig. 1 ersichtlichen Ausführungsform einen an ihrer Außenmantelfläche relativ langen, zylindrischen Abschnitt, der passend in den Gehäuseabschnitt 14 eingreift und an dessen Innenwandung anliegt.

Zur Bildung des Ausgleichsraumes 26 weist die Lagerbuchse 2 einen Längenabschnitt L auf, dessen Wand innen und außen durch zylindrische Wände begrenzt ist und eine relativ geringe Wandstärke besitzt. Über den Längenabschnitt L ist somit die Lagerbuchse 2 rohrförmig gestaltet. An den Längenabschnitt L schließt sich ein Längenabschnitt K an, der sich aus dem Kragen 7 und einem in der Wanddicke verstärkten Längenabschnitt zusammensetzt. Dieser letzte Längenabschnitt weist einen konisch sich verjüngenden Längenabschnitt M und einen zylindrischen Längenabschnitt V auf. In letzterem ist die Wulst 28 und ein Teil der Rollmembran 3 angeordnet, während sich in den Längenabschnitt M und in den Längenabschnitt L die Rollmembran 3 während des Dämpfungsvorganges federelastisch hineinverformt. Der Übergang von dem Längenabschnitt L zum Längenabschnitt M kann über einen Radius geschehen, um die Rollmembran 3 zu schonen.

Wird ein Impuls auf die Kolbenstange 8 und/oder das Gehäuse 1 ausgeübt, dann schieben sich diese Teile teleskopförmig ineinander, wobei der Dämpfungskolben 19 in den Dämpfungsraum 34 eintaucht und seine Drosselbohrungen 39 der Reihe nach durch die Innenwand des Gehäuseabschnittes 16 möglichst flüssigkeitsdicht abgedichtet werden.

Nach dem Abbremsen der Masse bewirkt die unter Spannung stehende Rollmembran 3, die aus einem Elastomer bestehen kann, die Rückstellung der Teleskopteile. In diesem Falle hebt sich die Ringschulter 36 der Kolbenstange 8 von der Stirnseite des Kolbenbodens 22 ab, so daß auch die Durchgangsbohrung 33 geöffnet wird. Die Verschiebung der Kolbenstange 8 gegenüber den Dämpfungskolben 19 dauert so lange, bis der Anschlag 37 an der inneren Stirnseite des Dämpfungskolbens 19 anstößt. Die Ringschulter 36 der Kolbenstange 8 und die Durchgangsbohrung 33 bilden also ein Rückschlagventil. Auf diese Weise vermag dann die im Ausgleichsraum 26 gespeicherte Flüssigkeitsmenge durch den Kanal 32 und durch die Durchgangsbohrung 33 wieder in den Dämpfungsraum 34 abzufließen. Ein Teil der Dämpfungsflüssigkeit tritt auch über die Verbindungsbohrung 24 oder dergleichen und die Drosselbohrungen 39 in den Dämpfungsraum 34 ein, bis der Industrie-Stoßdämpfer seine aus Fig. 1 ersichtliche Ausgangsstellung erreicht hat.

Nicht nur das Gehäuse 1, die Lagerbuchse 2, die Kolbenstange 8, der Ring 30 und der Dämpfungskolben 19, sondern auch der Anschlag 37 können aus metallischen Werkstoffen, zum Beispiel aus Stahl, bestehen.

Die Dichtungen und die Rollmembran 3 sind aus jeweils alterungsbeständigen, ozonbeständigen, lichtechten und gegen die eingesetzten Dämpfungsflüssigkeiten resistenten Elastomeren, zum Beispiel Polyurethankautschuken mit federelastischen Eigenschaften, hergestellt.

Bei der Ausführungsform nach Fig. 2 ist die Lagerbuchse 2 in dem aus der Zeichnung ersichtlichen Axiallängsschnitt etwa doppel T-förmig gestaltet, wobei der eine Steg des Doppel-T materialmäßig einstückig mit den Kragen 7 ausgebildet ist, während im axialen Abstand zu dem Kragen 7 der andere Steg des Doppel-T angeordnet und als Lagerringflansch 40 ausgebildet ist. Dieser Lagerringflansch 40 ist auf der Ringschulter 17 gelagert. Im übrigen ist der Lagerringflansch an seiner äußeren Mantelfläche ebenfalls zylindrisch ausgebildet und paßt satt in den Längenabschnitt 14 hinein und liegt an der Innenmantelfläche des Gehäuseabschnittes 14 flächig an.

Zwischen der Ringschulter 17 und dem Lagerringflansch 40 ist der Ausgleichsraum 26 geschaffen, in dem bei der dargestellten Ausführungsform ein Ausgleichs- oder Aufnahmeelement 41 aus einem elastischen ElastomerKunststoff angeordnet ist. Das Aufnahme oder Ausgleichselement 41 ist als geschlossenporiger Schwamm ausgebildet und dient zum Volumenausgleich für die einfahrende Kolbenstange.

Mit 42 ist ein Kanal bezeichnet, der die gleiche Funktion hat, wie der Kanal 32 der Ausführungsform der Fig. 1. Die Kolbenstange 8 ist in einer endstirnseitigen Vertiefung 43 angeordnet. Hierzu besitzt die Kolbenstange 8 eine im Durchmesser vergrößerte Schulter 44, die zum Teil aus der Vertiefung 43 axial in Richtung auf den Dämpfungskolben 19 herausragt. Die Vertiefung 43 ist koaxial zur Längsmittenachse 9 angeordnet.

Im Kolbenboden 22 ist eine Durchgangsbohrung 45 vorgesehen, die die gleiche Aufgabe hat wie die Durchgangsbohrung 33. Des weiteren ist im Kolbenboden 22 ein Ventilsitz 46 vorgesehen, dem ein Absperrkörper 47 zugeordnet ist, der vorliegend als Kugel ausgebildet ist. Damit diese Kugel 47 nicht aus der im Kolbenboden 22 gebildeten Ventilkammer 48 herausfallen kann, sind die dem Dämpfungsraum 34 zugekehrten Randbereiche 49 durch Umstemmen oder dergleichen umgebördelt, ohne allerdings den Strömungsquerschnitt zu verschließen.

Mit 50 ist eine nur schematisch angedeutete Druckfeder bezeichnet, die sich unter Vorspannung an ihrem einen Ende gegen den geschlossenen Boden des Gehäuses 1 und mit ihrem anderen Ende gegen den Kolbenboden 22 abstützt. Die Druckfeder 50 wird durch den zylindrischen Teil des Dämpfungskolbens 19 mit gelagert und geführt. Die Druckfeder 50 dient dazu, den Dämpfungskolben 19 und die Kolbenstange 8 in die gezeichnet Ausgangsstellung zu schieben.

Die Wirkungsweise der Drosselbohrungen 39 ist die gleiche wie im Zusammenhang mit Fig. 1 beschrieben.

An dem der Kolbenstange 8 zugekehrten Endbereich sind mindestens zwei sich rechtwinklig kreuzende, etwa halbkreisförmige Bohrungen oder Kanäle 51 bzw. 52 angeordnet, so daß beim Rückführen der Teleskopteile Dämpfungsflüssigkeit aus dem Ausgleichsraum 26 über das Rückschlagventil, also an dem Absperrkörper 47 vorbei, in den Dämpfungsraum 34 hineinfließen kann.

Auch bei dieser Ausführungsform bestehen wiederum das Gehäuse 1, die Lagerbuchse 2, die Kolbenstange 8, der Dämpfungskolben 19 sowie der Absperrkörper 47 aus einem metallischen Werkstoff, insbesondere aus Stahl.

Durch einen Vergleich der WO 94/17317 mit den aus Fig. 1 und 2 ersichtlichen Ausführungsformen gemäß der Erfindung läßt sich erkennen, wie wenige Einzelteile für einen erfindungsgemäßen Industrie-Stoßdämpfer benötigt werden und wie einfach der Aufbau solcher erfindungsgemäßer Ausführungsformen ist:

| **Zum Vergleich** | **WO 94/17317** | **Erfindung** |
|---|---|---|
| Einzelteile gesamt | 14 | 8 bzw. 9 |
| Norm bzw. Kaufteile | 4 | 2 bzw. 3 |
| Herzustellende Teile | 10 | 6 |

Die in der Zusammenfassung, in den Patentansprüchen und in der Beschreibung beschriebenen sowie aus der Zeichnung ersichtlichen Merkmale können sowohl einzeln als auch in beliebigen Kombinationen für die Verwirklichung der Erfindung wesentlich sein.

## Patentansprüche

1. Industrie-Stoßdämpfer mit einem rohrförmigen Gehäuse (1), einem längsverschieblich und dichtend darin angeordneten topfförmigen Dämpfungskolben (19), dem eine durch eine an einem Ende des einstückigen Gehäuses (1) befestigte Lagerbuchse (2) abgedichtet nach außen herausgeführte Kolbenstange (8) zugeordnet ist, wobei der Dämpfungskolben (19) eine oder mehrere Drosselbohrungen (39) aufweist, die seine Wand durchsetzen und einen Dämpfungsraum (34) mit einen den Dämpfungskolben (19) umgebenden Ringraum (25) verbinden, der seinerseits an einen auf der Rückseite des Dämpfungskolbens (19) befindlichen Ausgleichsraum (26) flüssigkeitsleitend anschließbar ist, **dadurch gekennzeichnet, daß** die Drosselbohrung oder die Drosselbohrungen (39) durch eine Innenwand des Gehäuses (1) durch Axialverschiebung des Dämpfungskolbens (19) abdeckbar oder verschließbar sind, daß dem Kolbenboden (22) ein Rückschlagventil (33, 36, 37 bzw. 45, 47, 48) zugeordnet ist, das während des Rückhubes des Dämpfungskolbens (19) eine flüssigkeitsleitende Verbindung zwischen dem Dämpfungsraum (34) und dem Ausgleichsraum (26) herstellt, daß die die Drosselbohrung (39) verschließende Wand des Gehäuses (1) eine relativ scharfkantige Ringschulter (18) des Gehäuses (1) aufweist und daß die Ringschulter (18) mehrere in Längsachsrichtung des Dämpfungskolbens (19) hintereinander angeordnete Drosselöffnungen stufenlos überstreicht und in Dämpfungsrichtung überdeckt bzw. absperrt, wobei der Dämpfungskolben (19) mit einer Ringschulter (23), die dem Kolbenboden (22) zugeordnet ist, in einem gegenüber dem endseitigen Gehäuseabschnitt (16), in den der Dämpfungskolben (19) bei seinem Dämpfungshub eintaucht, im Durchmesser vergrößerten Gehäuseabschnitt (15) längsverschieblich geführt ist, daß der Kolbenboden mindestens eine einseitig angeordnete Verbindungsbohrung (24) aufweist, die den Ringraum (25) an den Ausgleichsraum (26) flüssigkeitsleitend - gegebenenfalls mittelbar - anschließt, daß das rohrförmige Gehäuse (1) an seiner Außenseite durchgehend zylindrisch ausgebildet ist, während es innen aus drei sich über Ringschultern (17, 18) voneinander getrennten Gehäuseabschnitten (14, 15, 16) besteht, derart, daß die Durchmesser der Gehäuseabschnitte (14, 15, 16) von dem die Kolbenstange (18) umgebenden Gehäuseabschnitt (14) beginnend bis zu dem Gehäuseabschnitt (16), in dem der Dämpfungskolben (19) mit seinen Drosselbohrungen (39) geführt ist, abnehmen, wobei die wirksame Kolbenfläche des Dämpfungskolbens (19) nur geringfügig kleiner als der Gehäusequerschnitt des Gehäuses (1) bemessen ist und daß das Gehäuse (1) und der Dämpfungskolben (19) durch Aufbohren aus vollem Stangenmaterial aus Stahl herstellbar sind, wobei das Gehäuse (1), die Kolbenstange (8), der Ausgleichsraum (26) und das Rückschlagventil (33, 36, 37 bzw. 45, 47, 48), der Dämpfungskolben (19) und eine etwaige sich einerseits am Gehäuse (1) und andererseits in dem topfförmigen Dämpfungskolben (19) unter Vorspannung abstützende Druckfeder (50) koaxial zueinander angeordnet sind.

2. Stoßdämpfer nach Anspruch 1, **dadurch gekennzeichnet, daß** die Kolbenstange (8) einen einstückigen, im Durchmesser verringerten Zapfen (35) aufweist, dessen Länge größer als die in axialer Richtung gemessene Dicke des Kolbenbodens (22) ist und daß der Zapfen (35) eine zentrische Bohrung des Kolbenbodens (22) durchdringt, wobei der Zapfen im Abstand von seinem freien Ende einen Anschlag (37) aufweist, der mit Axialspiel zu dem dieser Seite zugekehrten Kolbenboden (22) angeordnet ist, derart, daß der Kolbenboden (22) um ein begrenztes Maß auf dem Zapfen (35) verschiebbar angeordnet ist, wobei der Kolbenboden (22) und die Kolbenstange (8) im Übergangsbereich zu dem Zapfen (35) durch orthogonal zur Längsmittenachse (9) des Stoßdämpfers verlaufende ebene Flächen begrenzt sind, mit denen sie flächig aufeinander liegen und eine Durchgangsbohrung (33) beim Dämpfungshub verschließen.

3. Stoßdämpfer nach Anspruch 1 oder 2, **dadurch gekennzeichnet, daß** im Kolbenboden (22) eine Ventilkammer (48) angeordnet ist, der ein Absperrkörper (47) zugeordnet ist, und daß die Ventilkammer (48) über eine Durchgangsbohrung (45) an eine oder mehrere Kanäle (51, 52) flüssigkeitsleitend angeschlossen sind.

4. Stoßdämpfer nach Anspruch 1 oder einem der darauffolgenden Ansprüche, **dadurch gekennzeichnet, daß** die Drosselbohrungen (39) über den Umfang des Dämpfungskolbens (19) gleichmäßig verteilt angeordnet sind.

5. Stoßdämpfer nach Anspruch 1 oder einem der darauffolgenden Ansprüche, **dadurch gekennzeichnet, daß** die Rollmembran (3) über eine Wulst (28) einerseits mit der Kolbenstange (8) in einem Ausgleichsraum (26) und andererseits über eine Wulst (29) mit einem Ring (30) flüssigkeitsdicht verbunden ist, wobei der Ring (30) abgedichtet in dem durchmessergrößten Gehäuseabschnitt (14) an der Ringschulter (17) radial durch die Innenwandung des im Durchmesser größten Gehäuseabschnittes (14) und axial durch die Ringschulter (17) dieses Gehäuseabschnittes (14) und durch einen rohrförmigen Abschnitt (53) der Lagerbuchse (2) axial arretiert ist, wobei der Ring (30) einen Kanal (32) aufweist, der über die Verbindungsbohrung (24) an den Ringraum (25) anschließbar ist und die Rollmembran (3) als Dichtung zur Volumenkompensation und als Rückholfeder für den Dämpfungskolben (19) dient.

6. Stoßdämpfer nach Anspruch 5, **dadurch gekennzeichnet, daß** die Rollmembran (3) beim Einsatz in den Druckraum eines Druckluft-Zylinders bei Druckbeaufschlagung eine zusätzliche Kraftkomponente zum Zurückführen der Kolbenstange (8) und des Dämpfungskolbens (19) bewirkt.

## Revendications

1. Amortisseur industriel comportant un boîtier tubulaire (1), un piston d'amortissement en forme de pot (19) qui y est agencé de sorte à pouvoir se déplacer longitudinalement et à établir l'étanchéité, auquel est affectée une tige de piston (8), dont l'étanchéité est établie par un coussinet (2) fixé sur une extrémité du boîtier d'une seule pièce (1) et qui est sortie vers l'extérieur, le piston d'amortissement (19) comportant un ou plusieurs orifices d'étranglement (39) traversant sa paroi et reliant un espace d'amortissement (34) avec un espace annulaire (25) entourant le piston d'amortissement (19), pouvant pour sa part être raccordée par conduction de fluide à un espace d'équilibrage (26) agencé sur le côté arrière du piston d'amortissement (19), **caractérisé en ce que** l'orifice d'étranglement ou les orifices d'étranglement (39) peuvent être recouverts ou fermés par une paroi interne du boîtier (1), par déplacement axial du piston d'amortissement (19), **en ce que** le fond du piston (22) comporte une soupape de retenue (33, 36, 37 et 45, 47, 48), établissant pendant la course vers l'arrière du piston d'amortissement (19) une liaison par conduction de fluide entre l'espace d'amortissement (34) et l'espace d'équilibrage (26), la paroi du boîtier (1) fermant l'orifice d'étranglement (39) comportant un épaulement annulaire à arêtes relativement vives (18) du boîtier (1), l'épaulement annulaire (18) balayant en continu plusieurs ouvertures d'étranglement agencées l'une derrière l'autre dans la direction longitudinale du piston d'amortissement (19), les recouvrant et les verrouillant dans la direction de l'amortissement, le piston d'amortissement (19) s'étendant avec un épaulement annulaire (23) affecté au fond du piston (22) dans une section du boîtier à diamètre accru (15), opposée à la section du boîtier (16) du côté de l'extrémité (16), dans laquelle pénètre le piston d'amortissement (19) lors de sa course d'amortissement, de sorte à pouvoir y effectuer un déplacement longitudinal, le fond du piston comportant au moins un orifice de liaison (24) agencé sur un côté, raccordant par conduction de fluide, éventuellement de manière indirecte, l'espace annulaire (25) à l'espace d'équilibrage (26), le boîtier tubulaire (1) ayant une forme cylindrique continue au niveau de son côté externe, sa partie interne étant composée de trois sections de boîtier (14, 15, 16) séparées par des épaulements annulaires (17, 18), de sorte à entraîner une réduction des diamètres des sections du boîtier (14, 15, 16), de la section de boîtier (14) entourant la tige de piston (18) vers la section de boîtier (16) dans laquelle s'étend le piston d'amortissement (19) avec ses orifices d'étranglement (39), la surface de piston active du piston d'amortissement (19) n'étant que légèrement inférieure à la section transversale du boîtier (1), le boîtier (1) et le piston d'amortissement (19) pouvant être fabriqués à partir d'acier, par alésage de matériau en barres, le boîtier (1), la tige de piston (8), l'espace d'équilibrage (26) et la soupape de retenue (33, 36, 37 et 45, 47, 48), le piston d'amortissement (19) et un éventuel ressort de pression (50) reposant par sollicitation d'une part sur le boîtier (1) et d'autre part dans le piston d'amortissement en forme de pot (19), étant agencés de manière mutuellement coaxiale.

2. Amortisseur selon la revendication 1, **caractérisé en ce que** la tige de piston (8) comporte un tourillon d'une seule pièce à diamètre réduit (35), dont la longueur est supérieure à l'épaisseur du fond du piston (22) mesurée dans la direction axiale, le tourillon (35) traversant un alésage central du fond du piston (22), le tourillon comportant ainsi une butée (37) espacée de son extrémité libre, agencée avec un jeu axial par rapport au fond du piston (22) orienté vers ce côté, le fond du piston (22) étant ainsi agencé sur le tourillon (35) de sorte à pouvoir y effectuer un déplacement limité, le fond du piston (22) et la tige de piston (8) étant délimités dans la zone de transition menant vers le tourillon (35) par des surfaces planes s'étendant de manière orthogonale par rapport à l'axe central longitudinal (9) de l'amortisseur, auxquelles ils sont superposés de manière plane, fermant un orifice de passage (33) lors de la course d'amortissement.

3. Amortisseur selon les revendications 1 ou 2, **caractérisé en ce que** le fond du piston (22) contient une chambre de soupape (48), à laquelle est affecté un corps de verrouillage (47), la chambre de soupape (48) étant raccordée par conduction de fluide à un ou plusieurs canaux (51, 52) par l'intermédiaire d'un orifice de passage (45).

4. Amortisseur selon la revendication 1 ou selon l'une des revendications suivantes, **caractérisé en ce que** les orifices d'étranglement (39) sont répartis régulièrement sur la périphérie du piston d'amortissement (19).

5. Amortisseur selon la revendication 1 ou selon l'une des revendications suivantes, **caractérisé en ce que** la membrane à enroulement (3) est reliée de manière étanche au fluide, d'une part à la tige de piston (8) dans un espace d'équilibrage (26) par l'intermédiaire d'un bourrelet (28) et d'autre part à une bague (30) par l'intermédiaire d'un bourrelet (29), la bague (30) étant bloquée de manière étanche dans la section du boîtier à diamètre accru (14)au niveau de l'épaulement annulaire (17), radialement par la paroi interne de la section de boîtier (14) à diamètre maximal et axialement par l'épaulement annulaire (17) de cette section de boîtier (14), le blocage axial étant aussi assuré par une section tubulaire (53) du coussinet (2), la bague (30) comportant un canal (32), pouvant être raccordé à l'espace annulaire (25) par l'intermédiaire de l'alésage de liaison (24) , la membrane à enroulement (3) servant de joint en vue de la compensation du volume et de ressort de rappel pour le piston d'amortissement (19).

6. Amortisseur selon la revendication 5, **caractérisé en ce que** lors de l'utilisation dans l'espace de pression d'un cylindre pneumatique, la membrane à enroulement (3) entraîne une composante de force additionnelle lors d'une mise sous pression en vue du retour de la tige de piston (8) et du piston d'amortissement (10).

## Claims

1. Industrial shock absorber with a tubular housing (1), a cup-shaped damping piston (19) which is arranged inside the tubular housing (1) so as to be longitudinally displaceable and to form a seal and to which damping piston (19) is assigned a piston rod (8) extending to the outside and running through a bearing bush (2) fastened to one end of the one-piece housing (1) and sealed and in which shock absorber the damping piston (19) incorporates one or more flow control holes (39) through its wall and connecting a damping chamber (34) with a ring-shaped chamber (25) surrounding the damping piston (19) which ring-shaped chamber (25) in turn can be connected to a compensating chamber (26) arranged on the rear side of the damping piston (19) so as to enable fluid to flow between the chambers, **characterised in that** the flow control hole or holes (39) through an inner wall of the housing (1) can be covered or closed by axial displacement of the damping piston (19) and **in that** a non-return valve (33, 36, 37 or 45, 47, 48 respectively) which during the return stroke of the damping piston (19) creates a fluid-conducting connection between the damping chamber (34) and the compensating chamber (26) is assigned to the piston head (22) and **in that** the wall of the housing (1) closing the flow control hole (39) incorporates a relatively sharp-edged ring-shaped shoulder (18) of the housing (1) and **in that** the ring-shaped shoulder (18) moves steplessly over a number of flow control holes arranged one behind the other in the longitudinal direction of the damping piston (19) and covers or blocks the flow control holes in the direction of damping and in which shock absorber the damping piston (19) is longitudinally displaceably guided by a ring-shaped shoulder (23) assigned to the piston head (22) in a housing portion (15) with a larger diameter and located opposite the end housing portion (16) into which the damping piston (19) slides during its damping stroke and **in that** the piston head incorporates at least one connecting hole (24) arranged on one side which connecting hole connects the ring-shaped chamber (25) - if necessary indirectly - to the compensating chamber (26) so as to enable fluid to flow between the chambers and **in that** the tubular housing (1) is constructed outside as a cylinder and inside of three housing portions (14, 15, 16) separated from one another by ring-shaped shoulders (17, 18) such that the diameters of the housing portions (14, 15, 16) progressively diminish from the housing portion (14) containing the piston rod (18) to the housing portion (16) in which the damping piston (19) with its flow control holes (39) slides and **in that** the effective surface of the damping piston (19) is constructed only slightly smaller than the cross-section of the housing (1) and **in that** the housing (1) and the damping piston (19) can be manufactured from steel by drilling from solid bar material and **in that** the housing (1), the piston rod (8), the compensating chamber (26) and the non-return valve (33, 36, 37 or 45, 47, 48 respectively), the damping piston (19) and any compression spring (50) braced under pretension against the housing (1) on the one hand and in the cup-shaped damping piston (19) on the other are arranged coaxially.

2. Shock absorber in accordance with claim 1, **characterised in that** the piston rod (8) incorporates a solid extension piece (35) of a smaller diameter the length of which extension piece (35) is greater than the thickness of the piston head (22) measured in the axial direction and **in that** the extension piece (35) runs through a central hole in the piston head (22) and **in that** the extension piece incorporates at a distance from its free end a stop (37) which is arranged to allow the extension piece to move freely in the axial direction of the surface of the piston head (22) facing the extension piece so that the piston head (22) can be displaced a certain distance along the extension piece (35) and in which shock absorber the piston head (22) and the piston rod (8) are bounded in the area of transition to the extension piece (35) by flat surfaces running at right angles to the longitudinal middle axis (9) of the shock absorber by the whole of which flat surfaces the piston head and the piston rod lie one against the other and close a through-hole (33) during the damping stroke.

3. Shock absorber in accordance with claim 1 or 2, **characterised in that** a valve chamber (48) to which a blocking element (47) is assigned is arranged in the piston head (22) and **in that** the valve chamber (48) is connected to one or more channels (51, 52) by a through-hole (45) so as to enable fluid to flow.

4. Shock absorber in accordance with claim 1 or one of the claims following it, **characterised in that** the flow control holes (39) are evenly distributed over the circumference of the damping piston (19).

5. Shock absorber in accordance with claim 1 or one of the claims following it, **characterised in that** the cup seal (3) is connected by a thickened edge (28) to the piston rod (8) in a compensating chamber (26) on the one hand and by a thickened edge (29) to a ring-shaped piece (30) on the other hand so as to form a fluidtight seal and **in that** the ring-shaped piece (30) which is sealed in the housing portion (14) with the largest diameter is retained on the ring-shaped shoulder (17) radially by the inner walling of the housing portion (14) with the largest diameter and axially by the ring-shaped shoulder (17) of this housing portion (14) and by a tubular portion (53) of the bearing bush (2) and **in that** the ring-shaped piece (30) incorporates a channel (32) which can be connected to the ring-shaped chamber (25) by the connecting hole (24) and **in that** the cup seal (3) serves as a seal for volume compensation and as a restoring spring for the damping piston (19).

6. Shock absorber in accordance with claim 5, **characterised in that** the cup seal (3) when inserted into the pressure chamber of a compressed-air cylinder generates an additional force component to move back the piston rod (8) and the damping piston (19) when pressure is applied.
